# EUROPEAN PATENT SPECIFICATION

(11) **EP 2 055 654 B1**
(45) Date of publication and mention of the grant of the patent: **22.06.2011**
(21) Application number: 07021469.7
(22) Date of filing: 05.11.2007
(51) Int. Cl.: B65G 11/02, B65G 67/24, B65G 69/28

(54) **Device for unloading boxed and hanging stock**
Vorrichtung zur Entladung von Kisten- und Hängebestand
Dispositif de déchargement de stock en boîte et suspendu

(43) Date of publication of application: 06.05.2009
(73) Proprietor: Deutsche Post AG, 53113 Bonn (DE)
(72) Inventor: Henshaw, Steve, Leicestershire LE9 6RF (GB); Mossop, Nick, Nottingham NG10 3GD (GB); Dunger, Mark, Leicestershire LE9 4FD (GB); Fairweather, Ben, Warwick CV34 6GB (GB)
(74) Representative: Jostarndt, Hans-Dieter

(56) References cited:
- DE-U1- 9 214 547
- GB-A- 745 618
- US-A- 2 449 829
- US-A1- 2006 045 695

## Description

The invention relates to a device for unloading boxed and hanging stock from the cargo area of a truck or trailer to the ground floor according to the preamble of claim 1.

Historically there have been health and safety concerns raised with the off loading of boxed and hanging stock from cargo areas of trucks and trailers and the need for the trucks and trailers to be equipped with tail lifts.

Normal deliveries without tail lift would entail a person in the trailer passing stock manually to another person who is at ground level for transfer to rails and dollies. This involves a lot of bending by the person within the truck / trailer and lifting above head height from the person at ground level. This process takes a lot of time to execute.

In order to facilitate the unloading process, buildings are often equipped with loading bridges, dock levelers, scissor type lifts or the like. Furthermore, trucks can be equipped with tail-lifts, too.

Deliveries with a tail lift require empty rails for hanging garments and dollies for boxed stock to be placed on the tail lift and lifted into the rear of the trailer. Stock is transferred onto the rails and dollies and then loaded onto the tail lift then lowered to ground level. The invention negates the need for delivery areas to be equipped with loading bridges, dock levelers, scissor type lifts or the like.

However, when none of these supporting means are available, because they are too expensive or they need too much permanent space, for example, there is a need for an alternative device. The device should be simple, mobile and inexpensive.

A device according to the preamble of claim 1 is known from US 2006/0045695 A1. Said known device can be used to establish an ergonomic tool for the beverage industry such that it aids delivery drivers in unloading cases of beverage from a truck. However, said known device is not arranged for a practical and ergonomic unloading of hanging stock.

Therefore, the objective of the invention is to provide a simple, mobile and inexpensive device for unloading boxed and also hanging stock from the cargo area of a truck or trailer.

According to the invention, this objective is achieved by a device having the features of the independent Claim 1. Advantageous refinements of the device are set forth in the dependent Claims 2 through 6.

The device according to the invention is for unloading boxed and hanging stock from the cargo area of a truck or trailer to the ground floor. The device is a chute comprising first and second horizontal chute surfaces mounted on different levels, whereby the first horizontal chute surface is mounted on a higher level than the second horizontal chute surface. Said first and second horizontal chute surfaces are connected to each other by a third inclined chute surface. The second and third chute surfaces are mounted on a front support structure and the first chute surface is mounted on a rear support structure, whereas the underside of the rear support structure is on a higher level than the underside of the front support structure.

Furthermore, the device comprises a slide rail to which garments on hangers can be hooked and which is connected to the front and rear support structure, the slide rail running besides and above the chute. The slide rail follows the run of the chute surfaces and is only fixed by two end poles. Thereby, the hanging slide rail runs at the same angles as the chute but is higher to enable hanging garments to clear the floor levels.

Preferably, the front and/or rear support structure is a framework or scaffold formed by connected vertical and horizontal bars.

Preferably, the rear of the support structure has wheels fitted on a central axle whilst the front of the support structure has aluminum round feet installed to the legs. Preferably, at the front of the chute on the bottom support rail there is a tow eye fitted this allows a trolley to be hooked into this eye enabling the chute to be lifted off its front support legs and then wheeled into the location as required. Alternatively, the front and rear support structure can comprise wheels, which can be locked.

Preferably, the chute surfaces and the framework are made of aluminium. Preferably, the front and rear support structure have a height of about 50-100cm. Preferably, their height is about 60cm. In one embodiment of the invention, the weight of the second chute surface, the third chute surface and the support structure underneath said surfaces equals or exceeds the weight of the first chute surface and the support structure underneath said surface.

Advantages, special features and practical refinements of the invention can be learned from the dependent claims and from the presentation below of preferred embodiments making reference to the figures.

### The figures show the following:

- Figure 1: a preferred embodiment of the device according to the invention;
- Figure 2: a front view of the device in Figure 1; and
- Figure 3: a side view of the device in Figure 1 being in use in the opening of a truck.

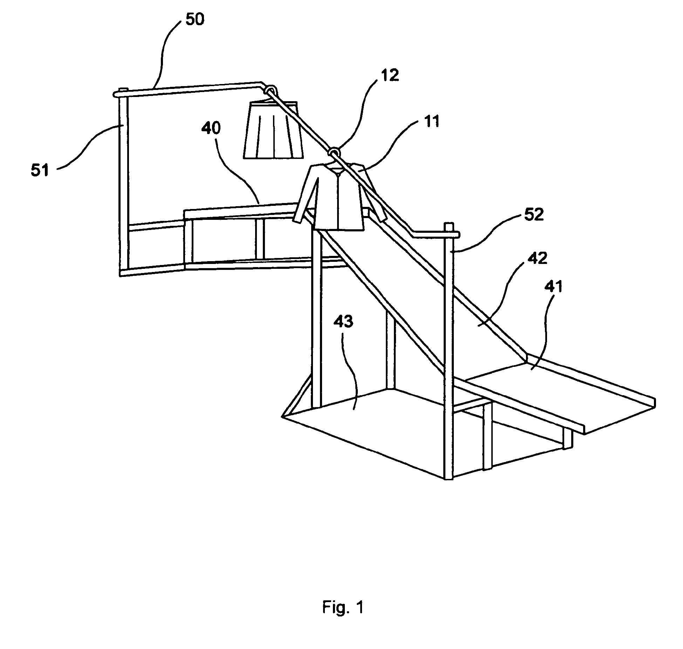

Fig. 1 shows a preferred embodiment of the device according to the invention. The device is a chute that can be installed at an opening of a truck or trailer 30. The chute is mounted on a support structure. The support structure can be made of wood, metal, plastics, etc, Preferably, the support structure is made of aluminium and is formed by several bars or poles that are connected to build a framework or scaffold underneath the chute. The device can be mobile or fixed to the ground floor 21.

The chute comprises first and second horizontal chute surfaces 40 and 41, whereby the first horizontal chute surface 40 is mounted on a higher level than the second chute surface 41. Thereby, the invention also covers chute surfaces that basically run horizontally, e.g. under an angle of up to ±10°. These horizontal chute surfaces are connected to each other by a third chute surface 42, which is inclined. The chute surfaces 40, 41 and 42 have lateral side plates for preventing stock from falling from the chute. Preferably, the chute surfaces 40, 41 and 42 are made of aluminium, too. Therefore, the device is light-weight, easy manoeuvrable and will not rust if left outside. The chute surfaces can be made of chequer plates, for example.

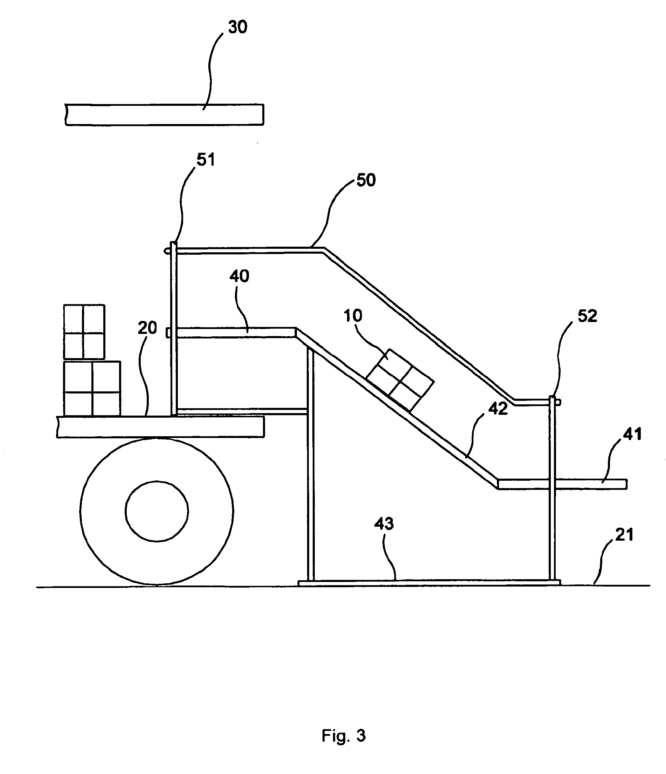

The first chute surface 40 is supported by a rear support structure underneath, which can be placed on the cargo area 20 of a truck 30, as it is shown in Fig. 3. The second horizontal chute surface 41 and the inclined chute surface 42 are supported by a front support structure which can be placed on the ground floor 21, as it is also shown in Fig. 3. Thereby, the underside of the rear support structure is on a higher level than the underside of the front support structure. If front and rear support structures are a scaffold formed by connected bars or poles, such scaffold has to be stable and firm.

In one embodiment of the invention, the front framework underneath the second and third chute surfaces is placed on a base plate 43. Thereby, the device can be lifted by lifting up the base plate 43. The support structures can also comprise wheels for moving such mobile chute. These wheels can be locked when the chute is in use. In one embodiment of the invention, the rear of the support structure has wheels fitted on a central axle whilst the front of the support structure has aluminum round feet installed to the legs. At the front of the chute on the bottom support rail there is a tow eye fitted this allows a trolley to be hooked into this eye enabling the chute to be lifted off its front support legs and then wheeled into the location as required.

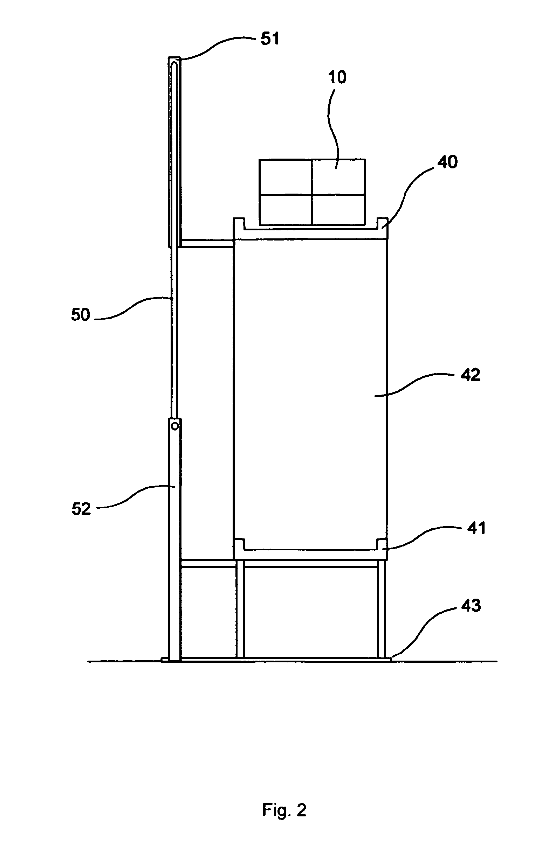

The device can further comprise a slide rail 50 running besides and above the chute. The garment rail is mounted on two vertical poles 51 and 52. The front pole 52 is attached to the front support structure and the rear pole 51 is attached to the rear support structure. The poles 51 and 52 are located besides the chute as it is shown in Fig. 2. Preferably, the slide rail follows the run of the chute surfaces 40, 41 and 42, which means that the rail 50 comprises front and rear portions that run horizontally and an inclined portion that connects the horizontal parts with each other. Basically, the garment rail 50 has the same shape as the chute and can be used for moving down garments 11 on hangers 12, as it is shown in Fig. 1. Thereby, it is required that the garment rail 50 is only fixed by two end poles 51 and 52.

Preferably, the weight of the second chute surface 41, the third chute surface 42 and the support structure underneath said surfaces equals or exceeds the weight of the first chute surface 40 and the support structure underneath said surface. Thereby, the device will not tilt over when the rear support structure underneath the first chute surface 40 is not supported by a cargo area of a truck or trailer.

The front and rear support structure have a height of about 50-100cm, Preferably, the height of the support structures is about 60cm, respectively. Thereby, boxed stock can be placed on the upper chute surface and picked up from the lower chute surface without a person having to bend down. Boxed stock can be sent down the chute from store rail height on the truck or trailer 30 to store rail height on the ground floor 21. In one embodiment of the invention, the height of the device is variable by means of a lift lifting the chute up or down.

When boxed stock like postal parcels 10 has to be unloaded from the cargo area 20 of a truck or trailer 30, the rear end of the device is placed on the cargo area 20, as it is shown in Fig. 3. Thereby, the support structure underneath the first chute surface 40 can touch the cargo area 20 or can be held above the cargo area. Boxed stock 10 is placed on the upper chute surface 40 by a first person and will slide down to another person who picks up the boxed stock from the lower chute surface 41.

Similarly, garments 11 on hangers 12 can be hooked to the slide rail 50 and will slide down, when they are pushed down the garment rail. Garments can be collected on the upper horizontal portion of the garment rail 50, for example, and pushed down the inclined portion of the garment rail. They will accumulate on the lower horizontal portion of the garment rail and can be picked up there.

Employees no longer lift off the back of the trailer at head height but from the bottom of the chute at waist height, which satisfies manual handling guidelines. The lower chute surface 41 can be covered by a material with a high coefficient of friction in order to slow down stock which is sliding down the chute.

### List of reference numerals

- 10: Stock, container, parcel
- 11: Garment
- 12: Hanger
- 20: Cargo area, load floor
- 21: Ground floor
- 30: Truck, trailer
- 40: First chute surface, higher level, rears side
- 41: Second chute surface, lower level, front side
- 42: Third chute surface, inclined
- 43: Base plate
- 50: Hand rail
- 51,52: Bar, pole

## Claims

1. Device for unloading boxed and hanging stock (10) from the cargo area (20) of a truck or trailer (30) to the ground floor (21), whereby the device is a chute comprising first and second horizontal chute surfaces (40;41) mounted on different levels, whereby the first horizontal chute surface (40) is mounted on a higher level than the second horizontal chute surface (41), said first and second horizontal chute surfaces (40;41) being connected to each other by a third inclined chute surface (42), and the second and third chute surfaces (41 ;42) are mounted on a front support structure and the first chute surface (40) is mounted on a rear support structure, whereas the underside of the rear support structure is on a higher level than the underside of the front support structure,
**characterized in**
**that** a slide rail (50) to which garments (11) on hangers (12) can be hooked is connected to the front and rear support structure, the slide rail (50) running besides and above the chute, whereby the slide rail (50) follows the run of the chute surfaces (40;41;42) and is only fixed by two end poles (51) and (52).

2. The device according to Claim 1,
**characterized in**
**that** the front and/or rear support structure is a framework formed by connected vertical and horizontal bars.

3. The device according to one of Claims 1 to 2,
**characterized in**
**that** the chute surfaces (40;41;42) are made of aluminium.

4. The device according to one of Claims 1 to 3,
**characterized in**
**that** the front and rear support structure comprise wheels, which can be locked.

5. The device according to one of Claims 1 to 4,
**characterized in**
**that** the front and rear support structure have a height of about 50-100cm, preferably 60cm.

6. The device according to one of Claims 1 to 5,
**characterized in**
**that** the weight of the second chute surface (41), the third chute surface (42) and the front support structure underneath said surfaces equals or exceeds the weight of the first chute surface (40) and the second support structure underneath said surface.

## Patentansprüche

1. Vorrichtung zur Entladung von Kisten- und Hängebestand (10) aus dem Laderaum (20) eines Lastkraftwagens oder Anhängers (30) auf den Boden (21), wobei die Vorrichtung eine Rutsche ist, die eine erste und eine zweite horizontale Rutschenoberfläche (40; 41) umfasst, die auf verschiedenen Ebenen angebracht sind, wobei die erste horizontale Rutschenoberfläche (40) auf einer höheren Ebene als die zweite horizontale Rutschenoberfläche (41) angebracht ist, wobei die erste und die zweite horizontale Rutschenoberfläche (40; 41) durch eine dritte, geneigte Rutschenoberfläche (42) miteinander verbunden sind, und wobei die zweite und die dritte Rutschenoberfläche (41; 42) an einer vorderen Tragstruktur angebracht sind und wobei die erste Rutschenoberfläche (40) an einer hinteren Tragstruktur angebracht ist, wobei die Unterseite der hinteren Tragstruktur auf einer höheren Ebene als die Unterseite der vorderen Tragstruktur ist,
**dadurch gekennzeichnet,**
**dass** mit der vorderen und mit der hinteren Tragstruktur eine Gleitschiene (50) verbunden ist, an die Kleidungsstücke (11) an Kleiderbügeln (12) angehakt werden können, wobei die Gleitschiene (50) neben und über der Rutsche verläuft, wobei die Gleitschiene (50) dem Verlauf der Rutschenoberflächen (40; 41; 42) folgt und nur durch zwei Endstangen (51) und (52) befestigt ist.

2. Vorrichtung nach Anspruch 1,
**dadurch gekennzeichnet,**
**dass** die vordere und/oder die hintere Tragstruktur ein Gerüst ist, das durch verbundene vertikale und horizontale Stäbe gebildet ist.

3. Vorrichtung nach einem der Ansprüche 1 bis 2,
**dadurch gekennzeichnet,**
**dass** die Rutschenoberflächen (40; 41; 42) aus Aluminium hergestellt sind.

4. Vorrichtung nach einem der Ansprüche 1 bis 3,
**dadurch gekennzeichnet,**
**dass** die vordere und die hintere Tragstruktur Räder umfassen, die arretiert werden können.

5. Vorrichtung nach einem der Ansprüche 1 bis 4,
**dadurch gekennzeichnet,**
**dass** die vordere und die hintere Tragstruktur eine Höhe von etwa 50-100 cm, vorzugsweise von 60 cm, aufweisen.

6. Vorrichtung nach einem der Ansprüche 1 bis 5,
**dadurch gekennzeichnet,**
**dass** das Gewicht der zweiten Rutschenoberfläche (41), der dritten Rutschenoberfläche (42) und der vorderen Tragstruktur unter den Oberflächen gleich dem oder größer als das Gewicht der ersten Rutschenoberfläche (40) und der zweiten Tragstruktur unter der Oberfläche ist.

## Revendications

1. Dispositif de déchargement de matériel (10) suspendu et se trouvant dans une boîte de la zone de cargaison (20) d'un camion ou d'une remorque (30) vers le sol (21), le dispositif étant une goulotte comprenant une première et une deuxième surface de goulotte horizontale (40 ; 41), celles-ci étant montées à différents niveaux, la première surface de goulotte horizontale (40) est montée à un niveau supérieur à la deuxième surface de goulotte horizontale (41), lesdites première et deuxième surfaces de goulotte horizontales (40 ; 41) étant connectées l'une à l'autre par une troisième surface de goulotte inclinée (42), et les deuxième et troisième surfaces de goulottes (41, 42) sont montées sur une structure de support avant et la première surface de goulotte (40) est montée sur une structure de support arrière, tandis que le côté inférieur de la structure de support arrière est à un niveau supérieur au côté inférieur de la structure de support avant,
**caractérisé en ce**
**qu'**un rail coulissant (50) auquel des vêtements (11) sur des cintres (12) peuvent être accrochés est connecté à la structure de support avant et arrière, le rail coulissant (50) s'étendant le long et au-dessus de la goulotte, moyennant quoi le rail coulissant (50) suit le cours des surfaces de goulotte (40 ; 41 ; 42) et est uniquement fixé par deux poteaux d'extrémité (51) et (52).

2. Dispositif selon la revendication 1,
**caractérisé en ce**
**que** la structure de support avant et/ou arrière est une charpente formée par des barres connectées verticales et horizontales.

3. Dispositif selon l'une des revendications 1 à 2,
**caractérisé en ce**
**que** les surfaces de goulotte (40 ; 41 ; 42) sont fabriquées en aluminium.

4. Dispositif selon l'une des revendications 1 à 3,
**caractérisé en ce**
**que** la structure de support avant et arrière comprend des roues qui peuvent être verrouillées.

5. Dispositif selon l'une des revendications 1 à 4,
**caractérisé en ce**
**que** la structure de support avant et arrière a une hauteur d'environ 50 à 100 cm, de préférence de 60 cm.

6. Dispositif selon l'une des revendications 1 à 5,
**caractérisé en ce**
**que** le poids de la deuxième surface de goulotte (41), de la troisième surface de goulotte (42) et de la structure de support avant en dessous desdites surfaces est égal à ou dépasse le poids de la première surface de goulotte (40) et de la seconde structure de support en dessous de ladite surface.
